# FASCICULE DE BREVET EUROPEEN

(11) **EP 2 243 662 B1**
(45) Date de publication et mention de la délivrance du brevet: **18.04.2012**
(21) Numéro de dépôt: 09305350.2
(22) Date de dépôt: 24.04.2009
(51) Int. Cl.: B60Q 1/26, B60Q 1/30

(54) **Dispositif d'éclairage et/ou de signalisation pour véhicule**
Vorrichtung zur Beleuchtung und/oder Signalisierung für Kraftfahrzeuge
Lighting and/or signalling device for a vehicle

(43) Date de publication de la demande: 27.10.2010
(73) Titulaire: Jean Chereau SAS, 50220 Ducey (FR)
(72) Inventeur: Gavard, Jean-Marc, 50870 PLOMB (FR); Courteille, Benoit, 50300 AVRANCHES (FR)
(74) Mandataire: Casalonga, Axel

(56) Documents cités:
- EP-A1- 1 959 076
- US-A- 4 058 720
- US-A- 4 658 335
- US-A- 6 164 804
- US-A1- 2003 200 623

## Description

L'invention concerne le domaine des dispositifs d'éclairage et/ou de signalisation pour véhicule, et notamment les dispositifs disposés à l'arrière d'un véhicule routier de transport de marchandises tel qu'un camion ou une remorque.

Les véhicules routiers de transport de marchandises ont leur arrière particulièrement soumis à des chocs. En effet, les camions ou les remorques sont souvent reculés contre des quais de chargement/déchargement. Des butées massives, reliées au châssis du véhicule, et parfois montées sur un élément à ressort, permettent d'encaisser le choc du véhicule sur le quai de chargement. Ces butées sont situées à la hauteur du plateau de charge du camion ou de la remorque. De plus, en raison de la hauteur des plateaux de chargement, les camions ou leur remorques sont équipés de barres anti-encastrement disposées à la hauteur des pare-chocs des véhicules de tourisme. L'arrière des camions ou des remorques peut également être équipé de tampons amortisseurs fixes permettant de reculer la remorque le plus près possible d'un muret. De tels tampons amortisseurs peuvent s'étendre verticalement entre le plateau de chargement du véhicule et la barre anti-encastrement.

L'implantation de feux-stop, d'indicateurs de changement de direction, ou d'indicateurs de recul est particulièrement délicate. En effet, ceux-ci doivent être visibles depuis l'arrière du véhicule. Ils comprennent souvent des lampes ou des LED entourés d'un cabochon en matière synthétique particulièrement fragile. De tels feux ont par exemple été implantés légèrement en retrait par rapport aux barres anti-encastrement, aux éventuelles butées sur vérin, ou aux tampons amortisseurs. Cela évite que le conducteur écrase les feux arrière de son camion en reculant celui-ci contre le quai de déchargement. Le retrait du feu par rapport aux différents organes de butée est toutefois limité par la nécessité pour ces organes de rester visibles.

Par le document FR 2 686 846, on connaît une implantation de feux arrière de camion ou de remorque. Un tube support, portant les feux arrière, est fixé par des griffes sur une coquille boulonnée sur le châssis du véhicule.

L'expérience montre que, malgré un léger retrait de tels feux par rapport aux organes de butée du véhicule, les cabochons de feux arrière de camion sont souvent cassés, sans que le feu lui-même ne soit cassé. La quantité de ces petits incidents est assez importante. Les causes peuvent en être multiples. Par exemple, les quais de déchargement peuvent présenter des obstacles irréguliers faisant légèrement saillie sur le quai, tels que des pierres ou des butées métalliques. Selon un autre exemple, les manoeuvres de déchargement sur la plateforme d'un hayon élévateur arrière de la remorque ou du camion, peuvent cogner le feu arrière et casser les cabochons. Selon encore un autre exemple, une caisse de grande dimension chargée manuellement peut heurter le feu arrière et casser un cabochon.

L'invention vise en particulier à réduire l'impact de ces petites anomalies sur les feux de signalisation.

L'implantation des dispositifs d'éclairage de signalisation de véhicules routiers fait l'objet du règlement n° 48 de la Commission Economique pour l'Europe des Nations Unies. Selon ce règlement, les feux de ces dispositifs présentent une position normale d'utilisation et peuvent être montés sur des éléments mobiles. Ils doivent toutefois revenir dans cette position normale de manière très répétitive. De plus, dans toute position fixe des feux autre que la position normale, la surface apparente dans la direction de l'axe de référence des feux ne doit pas être masquée à plus de 50 %. Cela suppose de contrôler le déplacement éventuel des feux arrière des camions ou des remorques.

On connaît par ailleurs, des dispositifs de signalisation destinés à des motos, tels que des feux indicateurs de changement de direction. Certains de ces feux sont montés sur un support en matériau élastomère. Lors d'un choc à vitesse réduite, de tels feux s'escamotent et reviennent à peu près à leur position initiale. De tels feux de signalisation ne conviennent toutefois pas pour des camions car la position normale d'utilisation n'est pas précise. De plus, les véhicules routiers de transport de marchandises sont soumis à des vibrations d'amplitude élevée dues aux irrégularités de la route et aux suspensions du véhicule. Si des feux de signalisation oscillaient par rapport à une position moyenne, il y aurait le risque que le signal perçu par un usager suivant le véhicule, apparaisse clignoter. Cela pourrait être une source d'erreur ou d'accident.

Un dispositif selon le préambule de la revendication 1 est connu du document US 6 164 804.

L'invention propose un dispositif d'éclairage et/ou de signalisation pour véhicules, en particulier de transport de marchandises sur route du type camion ou remorque, qui remédie aux inconvénients précités, et notamment qui permet de mieux maîtriser la position normale d'utilisation des feux tout en évitant la destruction du dispositif par des chocs d'amplitude réduite.

Selon l'invention, le dispositif d'éclairage et/ou de signalisation pour véhicule, comprend un support équipé d'un moyen de fixation au véhicule et un bloc mobile présentant une position de référence par rapport au support et étant équipé d'au moins un élément de signalisation destiné à être lumineux. Le bloc est mobile en rotation par rapport au support autour d'un axe de pivotement. L'axe de pivotement est décalé latéralement par rapport audit élément de signalisation selon une direction perpendiculaire à l'avancement du véhicule. Le dispositif comprend un moyen de rappel élastique conçu pour ramener le bloc mobile dans ladite position de référence lorsque le bloc mobile est situé dans une zone de déplacement à retour automatique et pour exercer un effort de plaquage entre le support et le bloc mobile lorsque ce dernier est dans la position de référence. Le moyen élastique comprend un ressort élastomère monobloc présentant deux portions cylindriques polygonales coaxiales, l'une des portions recevant un arbre polygonal ajusté et fixé au bloc mobile, respectivement au support, l'autre portion étant reçue dans un siège fixé au support, respectivement au bloc mobile.

On comprend que la zone de déplacement du bloc mobile à retour automatique permet au bloc de s'escamoter sous la pression d'objets légèrement intrusifs. Le ou les élément(s) de signalisation sont alors uniquement soumis à l'effort du moyen élastique de rappel qui reste très inférieur à la résistance mécanique des éventuels cabochons de feux. Le feu revient dans sa position de référence lorsque l'objet légèrement intrusif se retire. De plus, l'effort de plaquage en position de référence évite que l'élément de signalisation n'oscille sous l'effet de sa propre inertie. Cela permet de mieux maîtriser la position de référence du dispositif.

Le support peut être une pièce rapportée sur le châssis du véhicule ou une partie du châssis lui-même.

Avantageusement, la bloc mobile et le support sont rigides et comprennent des surfaces de guidage complémentaires aptes, lorsque le bloc est en position de référence par rapport au support, à immobiliser cinq degrés de liberté et à limiter le déplacement relatif dans un sens selon le sixième degré de liberté, l'effort de plaquage s'exerçant selon le sens opposé audit sens de déplacement limité par les surfaces de guidage.

On comprend qu'en cas d'effort extérieur sur le dispositif d'une intensité supérieure et opposée à l'effort de plaquage, le moyen de guidage permet au dispositif de s'escamoter dans la direction du degré de liberté laissé libre dans un sens. Cela évite de casser les cabochons de feux. Le dispositif reste dans la position de référence tant que l'effort exercé est inférieur à l'effort de plaquage exercé par le moyen de rappel. Le degré de liberté laissé libre peut être une rotation ou une translation.

Un choc provenant de l'arrière du véhicule sur des éléments de signalisation fait pivoter le bloc mobile autour de l'axe de pivotement.

Avantageusement, la position de référence est définie par des surfaces d'appui complémentaires du bloc mobile et du support à distance radiale de l'axe de pivotement.

Selon un exemple de réalisation qui ne fait pas partie de la présente invention, le dispositif comprend un premier élément de guidage équipé d'un fourreau et un deuxième élément de guidage équipé d'un arbre de guidage mobile en translation dans le fourreau, l'arbre de guidage et la fourreau étant coaxiaux à l'axe de pivotement, l'un des deux éléments de guidage étant fixé au support, l'autre élément de guidage étant fixé au bloc mobile.

Avantageusement, le moyen de rappel élastique est disposé de manière à exercer un effort entre les deux éléments de guidage dans l'axe de pivotement. Le ressort peut agir en compression ou en extension, la position de référence correspond à une configuration précontrainte du ressort.

Selon un exemple de réalisation qui ne fait pas partie de la présente invention, l'arbre de guidage est mobile en rotation par rapport au fourreau et dans lequel au moins un des éléments de guidage présente une surface inclinée par rapport à l'axe de pivotement et s'étendant à distance radiale de l'axe de pivotement, l'autre élément de guidage présentant une surface d'appui, les éléments de guidage étant conçus de manière que la surface d'appui est apte à entrer en contact avec la surface inclinée et à glisser le long de ladite surface inclinée. Pendant que la surface d'appui glisse le long de la surface inclinée, les éléments de guidage sont mobiles l'un par rapport à l'autre selon une trajectoire en hélice. Une butée le long de cette trajectoire, et un maintien de l'appui entre les deux surfaces précitées permettent de maîtriser la position relative des deux éléments de guidage et de définir la position de référence du dispositif.

Avantageusement, la première surface inclinée est prolongée par une surface de dégagement, perpendiculaire à l'axe de l'arbre de guidage, l'élément de guidage ne comprenant pas la surface de dégagement étant apte à coopérer avec ladite surface de dégagement, le bloc mobile sortant alors de la zone de déplacement à retour automatique. Le ressort de rappel exerce un effort axial perpendiculaire à la surface de dégagement. Cela permet au dispositif d'éclairage et/ou de signalisation de ne pas être détruit si le choc intrusif sur ledit dispositif impose un déplacement du bloc mobile supérieur à la zone de déplacement à retour automatique.

Le dispositif peut comprendre un indicateur de la sortie de la zone de retour automatique. Cet indicateur peut être une clavette sécable ou un interrupteur électrique actionné lorsque l'élément de guidage opposé coopère avec la surface de dégagement. L'interrupteur peut éteindre les feux et/ou envoyer un message d'erreur à la cabine du conducteur du véhicule.

Selon un exemple de réalisation qui ne fait pas partie de la présente invention, le premier élément de guidage comprend un premier flanc d'interface s'étendant radialement à une extrémité du fourreau, le deuxième élément de guidage comprend un deuxième flanc d'interface s'étendant radialement hors de l'arbre et situé en regard du premier flanc d'interface, l'un des premier ou deuxième flanc d'interface comprenant une rainure en Vé, l'autre flanc d'interface comprenant une nervure en Vé, correspondant au Vé de la rainure et présentant un axe de nervure coupant l'axe de pivotement.

Dans cet exemple de réalisation, le plaquage axial de la nervure dans la rainure fixe la position relative des deux éléments de guidage en rotation et en translation. Cela détermine la position de référence du bloc mobile par rapport au support. Lorsque les éléments de guidage tournent l'un par rapport à l'autre autour de l'axe de l'arbre, la rotation s'accompagne d'une légère translation axiale qui comprime ou étend le ressort au-delà de la configuration précontrainte.

Avantageusement, le dispositif comprend un axe métallique fixé au centre de l'arbre de guidage, le moyen de rappel élastique comprenant un ressort hélicoïdal en butée axiale entre le premier élément de guidage et ledit axe métallique. Ainsi, l'effort axial exercé par le ressort est transmis à l'axe métallique. Cela permet d'exercer un effort axial élevé tout en ayant des éléments de guidage en matériau synthétique moulable, notamment l'arbre de guidage.

Avantageusement, le bloc mobile comprend une armature métallique de bloc présentant un alésage de guidage ajusté audit axe métallique et s'étendant sur la majeur partie de l'étendue radiale dudit bloc mobile. L'effort extérieur exercé sur le bloc mobile est transmis par l'armature métallique du bloc à l'axe métallique du support. Cela réduit les contraintes mécaniques auxquelles sont soumis les autres composants du bloc mobile lorsque ce dernier est déplacé par un effort extérieur. Cela peut réduire par exemple les contraintes dans des coques extérieures ou dans des circuits électroniques d'alimentation des éléments de signalisation du bloc.

Avantageusement, le premier élément de guidage est intégré au support, ledit support comprenant une armature métallique présentant des moyens de fixation du support au châssis du véhicule et un alésage de renfort entourant le fourreau de guidage. Ainsi, les efforts axiaux ou transversaux exercés par l'arbre du bloc mobile sur le fourreau sont directement transmis par l'alésage de l'armature aux moyens de fixation et au châssis du véhicule.

Avantageusement, le bloc mobile et le support comprennent en outre des surfaces en arc de cylindre en regard l'une de l'autre, lesdites surfaces présentant chacune une lumière traversée par un conduit d'alimentation électrique. Cela permet que les conduits d'alimentation électrique soient toujours protégés par le dispositif et sortent du support pour longer le châssis.

Selon un autre aspect, l'invention porte également sur un véhicule équipé d'un système anti-encastrement, du type camion ou remorque, comprenant un dispositif d'éclairage et/ou de signalisation, disposé à l'arrière du véhicule de manière que les éléments de signalisation, lorsque le bloc mobile est en position de référence, soient situés en retrait et au dessus du système anti-encastrement et que la zone de déplacement à retour automatique soit encore plus en retrait vers l'avant du véhicule. On entend par système anti-encastrement, une barre anti-encastrement horizontale ou une partie de hayon élévateur arrière satisfaisant à la législation en vigueur concernant les protections anti-encastrement. Les barres anti-encastrement sont généralement en léger retrait par rapport aux éventuelles butées de recul sur vérins ou au tampon amortisseur. Ainsi, les chocs potentiels de grande amplitude n'atteignent pas le dispositif. Les autres chocs arrière, d'amplitude réduite, ne provoquent pas la casse du dispositif car le bloc mobile peut se déplacer dans la zone de retour automatique.

Avantageusement, le véhicule comprend un châssis central longitudinal sur lequel est fixé le support.

D'autres caractéristiques et avantages de l'invention apparaîtront mieux à la lecture de la description qui suit de plusieurs modes de réalisation de l'invention, donnés à titre d'exemples non limitatifs. La description se réfère aux figures annexées sur les quelles :
- la figure 1 est une vue arrière d'un camion équipé d'un premier exemple de réalisation du dispositif qui ne fait pas partie de la présente invention;
- la figure 2 est une vue de côté du camion de la figure 1 ;
- la figure 3 est une vue de dessus du premier exemple de réalisation qui ne fait pas partie de la présente invention;
- la figure 4 est une vue de dessus du support du premier exemple de réalisation qui ne fait pas partie de la présente invention;
- la figure 5 est une perspective cavalière du support du premier exemple de réalisation qui ne fait pas partie de la présente invention;
- la figure 6 est une perspective cavalière du bloc mobile du premier exemple de réalisation qui ne fait pas partie de la présente invention;
- la figure 7 est une vue de détail de la nervure en Vé ;
- la figure 8 est une vue éclatée du premier exemple de réalisation qui ne fait pas partie de la présente invention;
- la figure 9 est une coupe partielle de l'articulation du premier exemple de réalisation qui ne fait pas partie de la présente invention;
- les figures 10 et 11 sont des coupes verticale et horizontal d'un deuxième exemple de réalisation qui ne fait pas partie de la présente invention;
- les figures 12 et 13 sont des coupes verticale et horizontal d'un mode de réalisation selon l'invention; et
- les figures 14 et 15 sont des vues de dessus et en perspective cavalière d'un troisième exemple de réalisation qui ne fait pas partie de la présente invention;

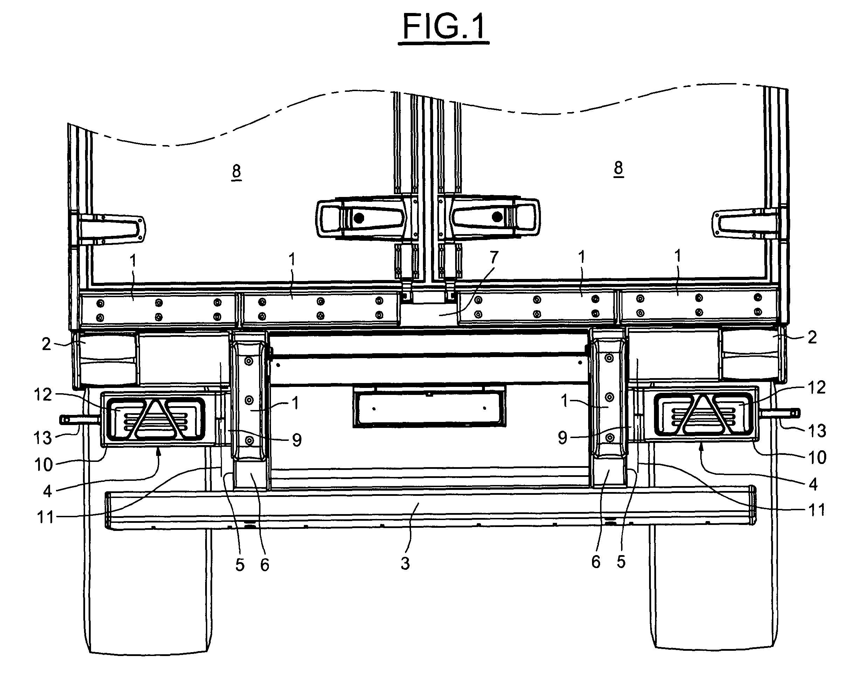

Comme illustré en figure 1, la face arrière d'un véhicule de transport routier de marchandises, tel qu'un camion ou une remorque, comprend des butées passives 1, généralement en matériau élastomère, des tampons de recul 2 montés sur éléments ressort et équipés de rouleaux horizontaux, une barre anti-encastrement 3 et deux dispositifs d'éclairage et/ou de signalisation 4 fixés sur des faces extérieures 5 des poutres 6 du châssis du véhicule. Les butées passives 1 sont disposées le long d'une barre de seuil 7 juste en dessous du niveau du plancher de chargement et de l'ouverture des portes 8. Des butées passives 1 sont également disposées verticalement sur la hauteur des poutres 6 du châssis. Les tampons de recul 2 permettent de rouler le long d'un rebord vertical du quai de chargement. Cela évite de dégrader le quai lors de la remontée progressive du plateau de charge du véhicule au cours du déchargement du véhicule.

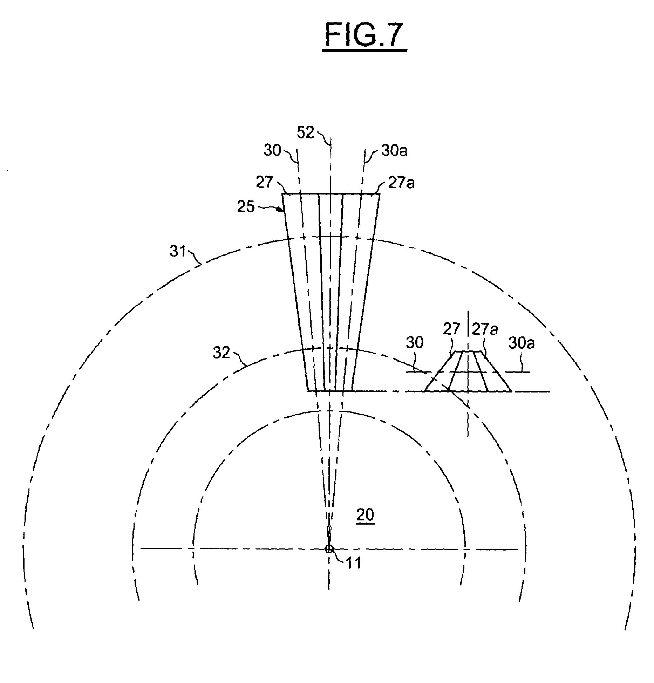

Chacun des dispositifs 4 d'éclairage et/ou de signalisation du véhicule comprend un support 9 dont la fixation sur la face extérieure 5 sera détaillée en figure 7. Le dispositif 4 comprend également un bloc mobile 10 articulé dans le support 9 autour d'un axe de pivotement vertical 11. Le bloc mobile 10 comprend une série d'éléments de signalisation 12 émettant de la lumière, ainsi que un ou plusieurs catadioptres. Les éléments de signalisation 12 émettant de la lumière peuvent soit fournir une indication, comme les feux indicateurs de direction, les feux stop, les feux de position ou les feux de brouillard, d'autres servent à éclairer en même temps qu'à donner une indication tels que les feux de marche arrière. Le bloc mobile 10 est prolongé à son extrémité extérieure par un feu corne 13 monté sur un support élastomère, et indiquant l'encombrement extrême du véhicule.

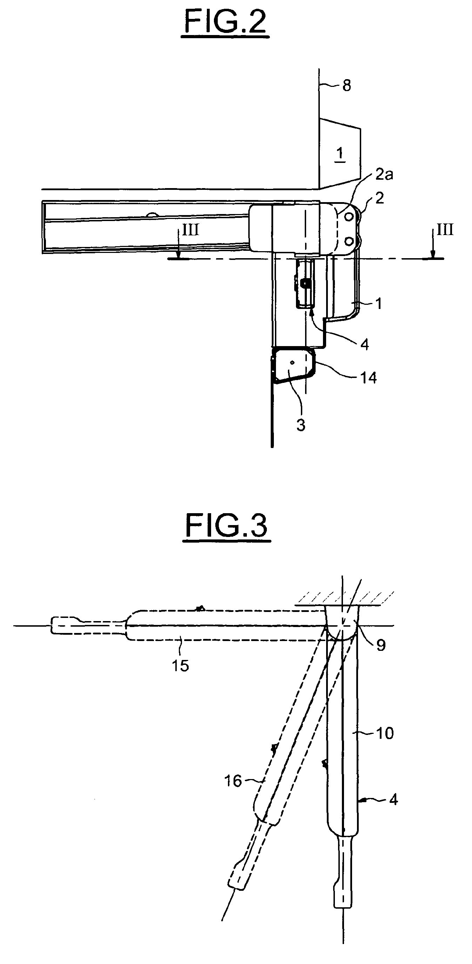

Ainsi qu'illustré en figure 2, le bloc mobile 10, ainsi que les éléments lumineux 12 qu'il contient, sont situés en retrait ou au plus dans l'alignement d'une surface extrême arrière 14 de la barre anti-encastrement 3. Le tampon de recul 2 fait saillie à l'arrière de la remorque ou du camion au-delà de la surface extrême 14. La position de recul maximum 2a du tampon de recul 2 est illustrée en pointillés sur la figure 2. Le dispositif 4 est en retrait par rapport à cette position de recul maximum 2a.

Le tampon de recul 2, la butée passive 1 verticale et la barre anti-encastrement 3 constituent autant de protections du dispositif de signalisation 4. Toutefois, en cas d'effort sur le bloc mobile 10, celui-ci pivote autour de l'axe de pivotement vertical 11 depuis la position de référence illustrée en trait plein sur les figures 2 et 3, jusqu'à une position extrême 15 non fonctionnelle. Le retour automatique à la position de référence est assuré quelle que soit la position de pivotement comprise entre la position de référence et une position extrême de retour automatique 16.

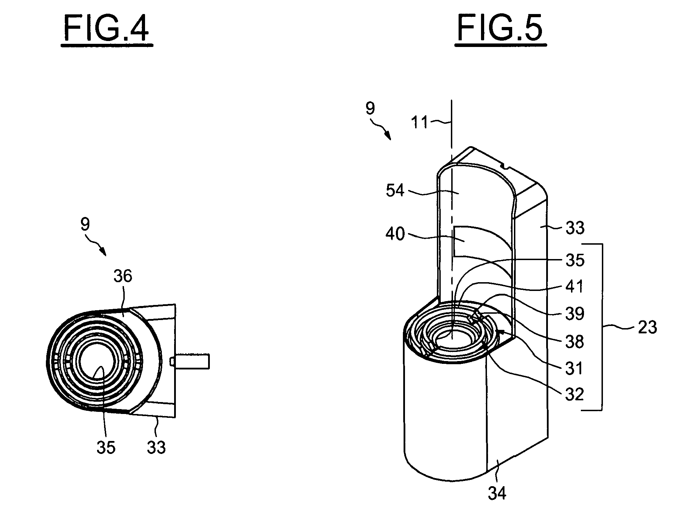

Comme illustré aux figures 4 et 5, le support 9 comprend un socle 33 et une excroissance 34 contenant un fourreau 35. Le support 9 comprend un premier flanc d'interface 36 normal à l'axe de pivotement vertical 11. Le flanc d'interface 36 comprend deux lèvres circulaires 31 et 32 concentriques. Chacune des lèvres 31 et 32 est équipée de deux rainures en Vé présentant des surfaces inclinées respectivement 38 et 39. L'angle au sommet des surfaces inclinées 38, 39 de chaque rainure en Vé est proportionnel au diamètre de la lèvre circulaire 31, 32 sur laquelle est située ladite rainure en Vé. Le fourreau 35 et les deux rainures en Vé 38 et 39 constituent le premier élément de guidage 23 du dispositif 4.

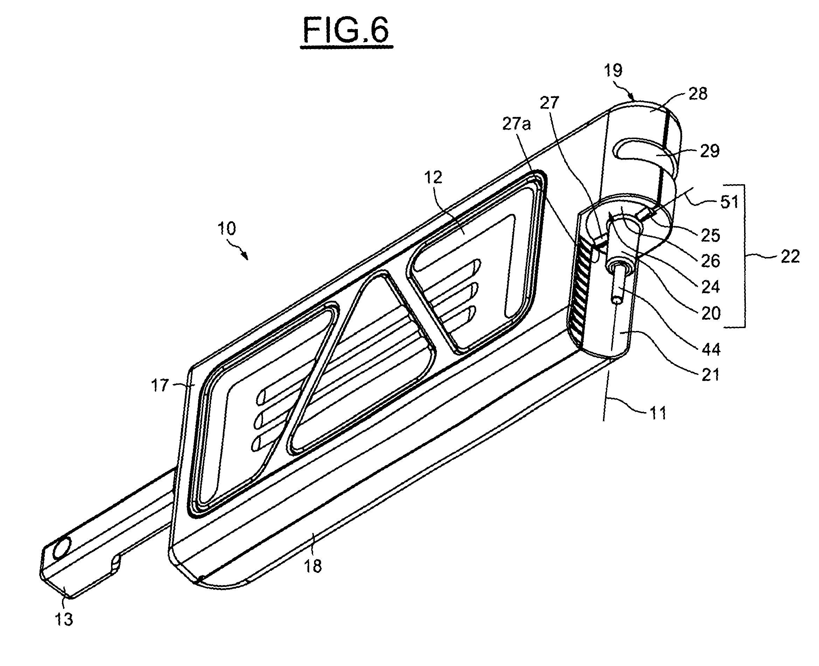

Les lèvres 31, 32 contribuent également à la rigidité du premier flanc d'interface 36. Le socle 33 du support 9 présente une surface 54 en arc de cylindre comprenant une lumière 40 destinée à correspondre à la lumière 29 du support mobile 10. Le sommet des lèvres 31, 32 constituent une surface de dégagement 41 contre laquelle peut glisser le sommet de nervure 25 (figures 6, 7) une fois celles-ci sorties des rainures en Vé 38 et 39.

Comme illustré en figure 6, le bloc mobile 10 est de forme générale rectangulaire et présente une excroissance latérale 19 faisant saillie d'un petit côté 21 du rectangle. Le bloc mobile 10 comprend une coque extérieure frontale 17 et un dos 18. La coque extérieure frontale 17 est ajourée selon la législation en vigueur et laisse voir les éléments de signalisation 12.

Un arbre de guidage 20 fait saillie de l'excroissance latérale 19 et s'étend le long de l'axe de pivotement 11 parallèlement et à distance radiale du côté latéral en retrait 21 du bloc mobile 10. L'arbre de guidage 20 est raccordé à l'excroissance latérale 19 par un deuxième flanc d'interface 24 s'étendant hors de l'arbre de guidage 20 sur un côté de l'excroissance latérale 19. L'arbre de guidage 20 est ajusté au fourreau 35 et coulisse dans ledit fourreau 35 en rotation et en légère translation. Le deuxième flanc d'interface 24 est en regard du premier flanc d'interface 36.

Le deuxième flanc d'interface 24 comprend deux nervures 25 faisant saillie d'une partie plate 26 du deuxième flanc d'interface 24. Les deux nervures 25 sont disposées selon deux rayons diamétralement opposés de part et d'autre de l'arbre de guidage 20 le long d'un axe de nervure 52 et comprennent chacune deux surfaces inclinées 27 et 27a. L'arbre de guidage 20 et la nervure 25 constituent un deuxième élément de guidage 22 du dispositif 4.

L'excroissance latérale 19 comprend également une surface en arc de cylindre 28 présentant une lumière 29 allongée selon un plan perpendiculaire à l'axe de pivotement vertical 11.

Un axe métallique 44 est emmanché dans l'arbre de guidage 20 qui est monobloc avec le dos 18 en matériau synthétique. L'axe métallique 44 fait saillie à l'extérieur de l'arbre de guidage 20 d'un côté opposé à l'excroissance latérale 19.

Comme illustré en figure 7, les surfaces inclinées 27 et 27a des nervures 25 sont disposées de manière que leurs lignes médianes 30 et 30a dans un plan radial, passent par l'axe de pivotement vertical 11. De plus, l'inclinaison des surfaces 27, 27a varie de manière proportionnelle à la distance à l'axe de pivotement vertical 11. Ainsi, pendant que la nervure 25 pivote autour de l'axe de pivotement vertical 11, la rainure en Vé 38 de la lèvre 31 de plus grand diamètre provoque la même élévation du bloc mobile 10 que la rainure en Vé 39 moins évasée et située sur la lèvre 32 de diamètre plus réduit.

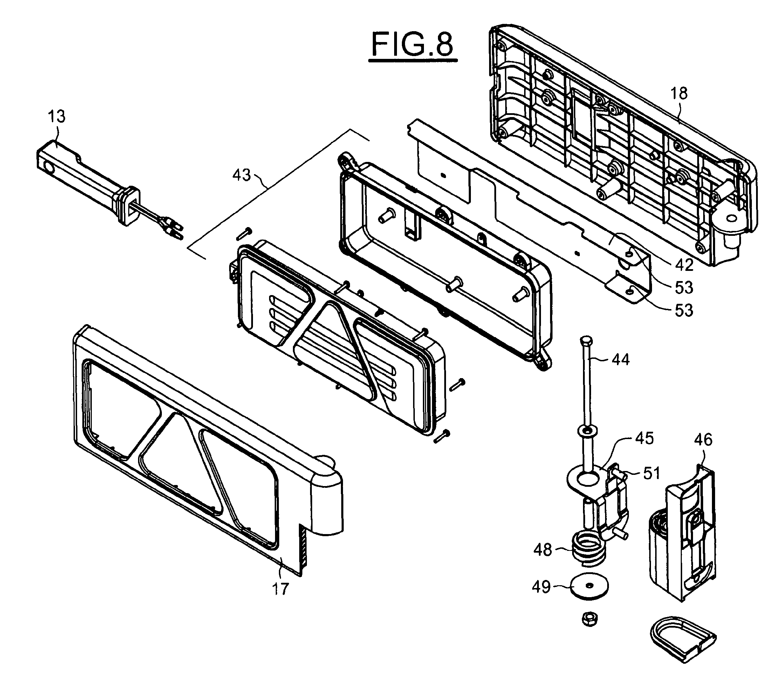

Comme illustré à la figure 8, le dispositif comprend en outre une armature de bloc 42 et un caisson électronique 43 renfermant les éléments de signalisation lumineux non représentés. Ceux-ci peuvent être par exemple des ampoules ou des LEDs. Le caisson électronique 43 et l'armature de bloc 42 sont insérés entre la coque extérieure frontale 17 et le dos 18. L'armature de bloc 42 comprend des orifices 53 destinés à recevoir l'axe métallique 44. Le support 9 comprend une armature métallique 45 surmoulée à l'intérieur d'un corps de support 46.

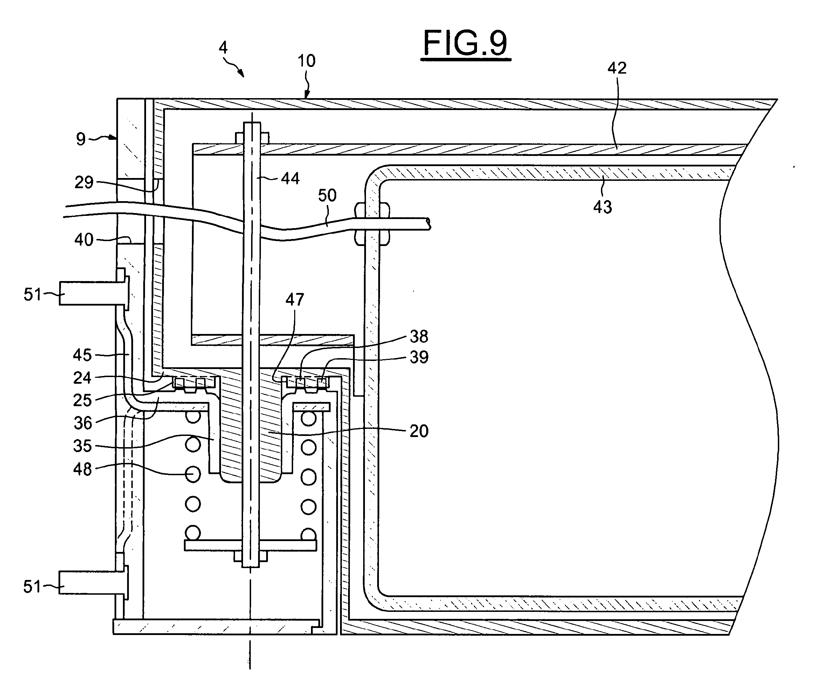

Comme illustré en figure 9, le fourreau 35 et le premier flanc d'interface 36 sont monoblocs avec le corps de support 46. L'armature métallique 45 comprend un alésage 47 entourant le fourreau 35 en matériau synthétique. L'armature métallique 45 comprend également des vis de fixation 51. Un ressort hélicoïdal 48 est disposé entre l'armature métallique 45 et une rondelle 49 solidaire de l'axe métallique 44.

Le dispositif 4 comprend une articulation autour de l'axe de pivotement vertical 11 pour laquelle l'ensemble des surfaces destinées à être en contact de frottement l'un avec l'autre sont en matériau synthétique de manière à réduire les frottements. Ainsi, le premier flanc d'interface 36, le deuxième flanc d'interface 24, le fourreau 35 et l'arbre de guidage 20 sont obtenus par moulage. En revanche, cette même articulation comprend une succession d'armatures métalliques 45, 44 et 42 destinées à assurer la rigidité de l'articulation. Cela permet des efforts de frottement réduits tout en ayant des efforts de plaquage élevés.

De plus, le caisson électronique 43 est sensiblement étanche. Un conduit d'alimentation électrique 50 sort de manière étanche du caisson 43 et traverse les lumières correspondantes 46 et 29 du bloc mobile 10 et du support 9.

On comprend que le dispositif 4 présente une position de référence déterminée par le plaquage de la nervure 25 dans les rainures 38, 39. Le bloc mobile 10 peut pivoter autour de l'axe de pivotement 11. Tant que les surfaces 27 ou 27a de la nervure 25 sont en appui sur les surfaces inclinées 38, 39 des rainures en Vé, le bloc mobile 10 est dans la zone de déplacement à retour automatique vers la position de référence. Dès que la nervure 25 glisse sur les surfaces de dégagement 41, le bloc mobile quitte la zone de déplacement à retour automatique.

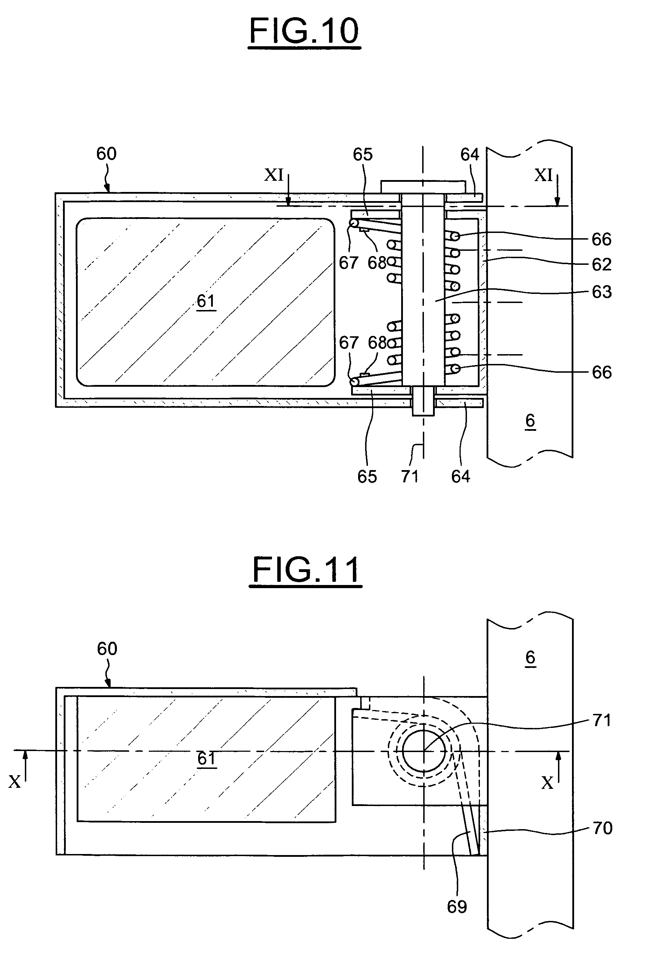

Comme illustré aux figures 10 et 11, le deuxième exemple de réalisation qui ne fait pas partie de la présente invention comprend un bloc mobile 60 et un support 62 en forme de U. Le bloc mobile 60 présente une forme générale parallélépipédique et contient un ensemble 61 d'éléments de signalisation,. Le fond de la forme en U du support 62 est fixé sur la poutre de châssis 6. Le dispositif comprend également un arbre de pivotement 63 cylindrique de section circulaire traversant des orifices correspondants dans des parois horizontales 64 du bloc mobile 60 et dans des parois latérales 65 de la forme en U du support 62. Le dispositif comprend également deux ressorts hélicoïdaux 66 entourant l'arbre de pivotement 63. Chaque ressort 66 présente une première extrémité 67 en appui sur un ergot 68 d'une des parois latérales 65 du support 62, et une deuxième extrémité 69 en appui sur une paroi verticale 70 du bloc mobile 60. Les parois horizontales 64 du bloc mobile 60 présentent une forme en arc de cercle illustrée en pointillés sur la figure 11 de manière que l'ensemble du bloc mobile puisse pivoter autour de l'axe 71 de l'arbre de pivotement 63. La paroi verticale 70 du bloc mobile 60 sert d'appui contre le support 80. Cet appui définit la position de référence. Dans cette position, le ressort 66 est précontraint.

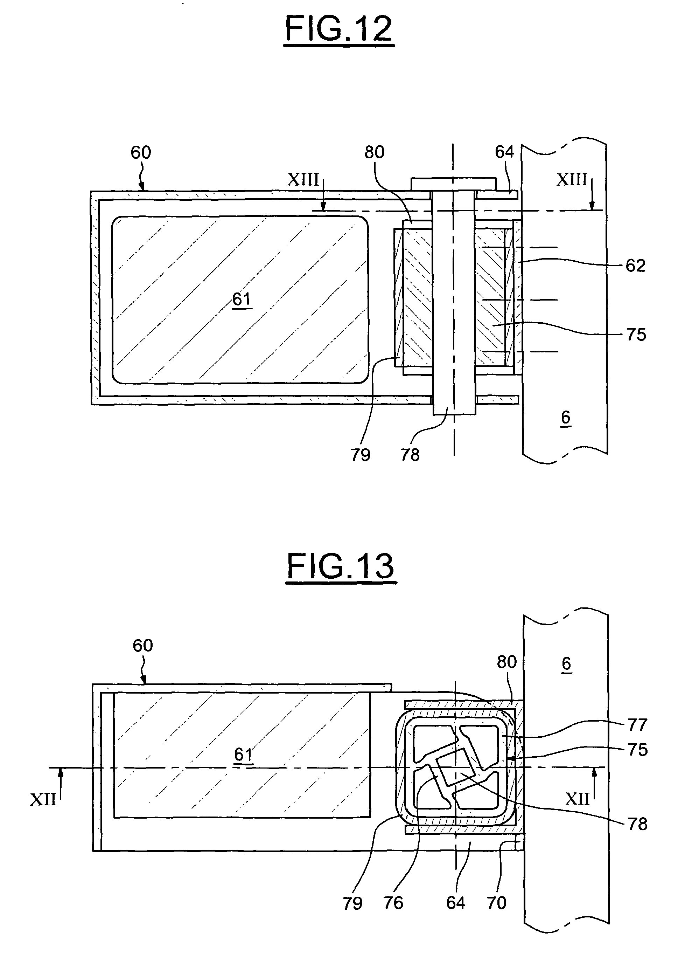

Comme illustré aux figures 12 et 13, le mode de réalisation selon l'invention diffère du deuxième exemple de réalisation par la forme du moyen de rappel élastique. Le moyen de rappel élastique comprend un ressort élastomère monobloc 75 obtenu par extrusion et présentant deux portions 76 et 77 cylindriques, creuses, coaxiales et de section droite carrée. La portion 76 est située à l'intérieur de la portion 77. Un arbre de pivotement 78 à section carrée ajustée à la portion élastomère 76 est fixé dans deux lumières carrées des parois horizontales 64 du bloc mobile 60. La portion extérieure élastomère 77 est ajustée dans un tube métallique 79 à section carrée correspondante et fixée sur un support 80 en forme de U. Une paroi verticale 70 du bloc mobile 60 sert d'appui contre le support 80. Cet appui défini la position de référence. Le ressort élastomère est au repos lorsque les portion intérieure 76 et extérieure 77 sont décalées de 45°. Dans la position de référence illustré en figure 11, le ressort élastomère est précontraint d'un angle de 5 à 20°.

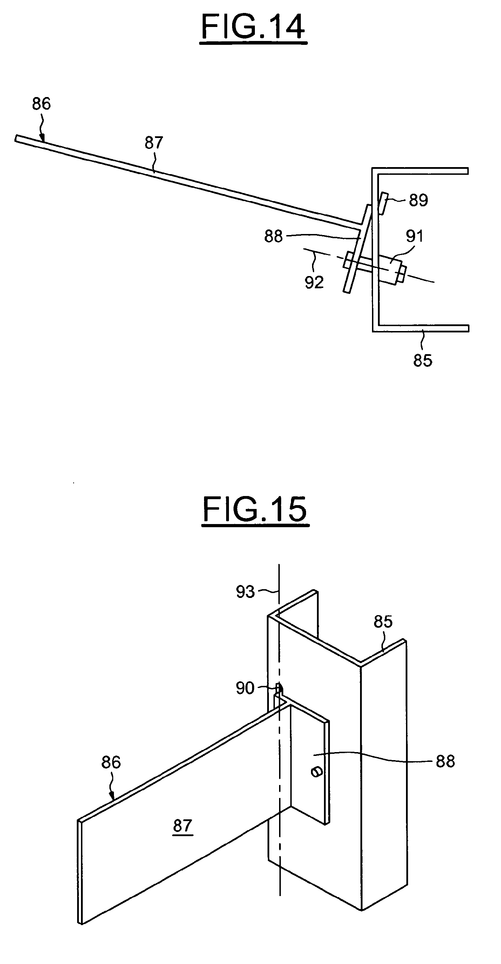

Comme illustré aux figures 14 et 15, le troisième exemple de realisation qui ne fait pas partie de la présente invention comprend un support 85 qui est une partie de la poutre de châssis 6 et un bloc mobile 86 en forme de T. Le bloc mobile 86 comprend une plaque principale 87 disposée verticalement sur laquelle est fixé un ensemble d'éléments de signalisation non représentés. Le bloc mobile 86 comprend également une plaque latérale 88 perpendiculaire à la plaque principale 87, présentant un décrochement vertical arrière 89 pénétrant dans une lumière verticale correspondante 90 du support 85. Le dispositif comprend également un mécanisme à ressort 91 tirant la plaque latérale 88 contre le support 85 selon un axe de rappel 92 à distance de la lumière 90. La lumière 90 et le décrochement vertical 89 définissent un axe de pivotement 93 du dispositif. Lorsque la plaque latérale 88 est en contact avec le support 85, le mécanisme à ressort 91 est précontraint. Ainsi le pivotement n'a lieu qu'à partir d'un certain seuil d'effort sur le bloc mobile.

## Revendications

1. Dispositif (4) d'éclairage et/ou de signalisation pour véhicule, comprenant un support (9, 62, 80, 85) équipé d'un moyen de fixation (51) au véhicule et un bloc mobile (10, 60, 86) présentant une position de référence par rapport au support (9, 62, 80, 65) et étant équipé d'au moins un élément de signalisation (12) destiné à être lumineux, le bloc (10, 60, 86) étant mobile en rotation par rapport au support (9, 62, 80, 85) autour d'un axe de pivotement (11, 71, 93) décalé latéralement par rapport audit élément de signalisation (12) selon une direction perpendiculaire à l'avancement du véhicule, le dispositif comprenant un moyen de rappel élastique conçu pour ramener le bloc mobile (10, 60, 86) dans ladite position de référence lorsque le bloc mobile est situé dans une zone de déplacement à retour automatique (16) et pour exercer un effort de plaquage entre le support (9, 62, 80, 85) et le bloc mobile (10, 60, 86) lorsque ce dernier est dans la position de référence, **caractérisé en ce que** le moyen de rappel élastique comprend un ressort élastomère monobloc (75) présentant deux portions cylindriques polygonales coaxiales (76, 77), l'une (76) des portions recevant un arbre polygonal (78) ajusté et fixé au bloc mobile (60), respectivement au support, l'autre portion (77) étant reçue dans un siège (79) fixé au support (80), respectivement au bloc mobile.

2. Dispositif selon la revendication 1, dans lequel le bloc mobile (10, 60, 86) et le support (9, 62, 80, 85) sont rigides et comprennent des surfaces de guidage complémentaires aptes, lorsque le bloc est en position de référence par rapport au support, à immobiliser cinq degrés de liberté et limiter le déplacement relatif dans un sens selon le sixième degré de liberté, l'effort de plaquage s'exerçant selon le sens opposé audit sens de déplacement limité par les surfaces de guidage.

3. Dispositif selon la revendication 1 ou 2, dans lequel la position de référence est définie par des surfaces d'appui complémentaires du bloc mobile (10, 60, 86) et du support (9, 62, 80, 85) à distance radiale de l'axe de pivotement (11, 71, 93).

4. Véhicule équipé d'un système anti-encastrement, du type camion ou remorque, comprenant un dispositif (4) d'éclairage et/ou de signalisation selon l'une des revendications précédentes, disposé à l'arrière du véhicule de manière que les éléments de signalisation (12), lorsque le bloc mobile (10, 60, 86) est en position de référence, soient situés en retrait et au dessus du système anti-encastrement (3) et que la zone de déplacement à retour automatique (16) soit encore plus en retrait vers l'avant du véhicule.

## Claims

1. Lighting and/or signalling device (4) for a vehicle, comprising a base (9, 62, 80, 85) fitted with an attachment means (51) for attachment to the vehicle and a movable unit (10, 60, 86) having a reference position relative to the base (9, 62, 80, 85) and being provided with at least one signalling element (12) designed to be luminous, the unit (10, 60, 86) being able to rotate relative to the base (9, 62, 80, 85) about a pivoting axis (11, 71, 93) offset laterally relative to the said signalling element (12) in a direction perpendicular to the forward travel of the vehicle, the device comprising an elastic return means designed to return the movable unit (10, 60, 86) to the said reference position when the movable unit is situated in an automatic-return movement zone (16) and to apply a flattening force between the base (9, 62, 80, 85) and the movable unit (10, 60, 86) when the latter is in the reference position, **characterized in that** the elastic return means comprises a one-piece elastomer spring (75) having two coaxial polygonal cylindrical portions (76, 77), one of the portions (76) receiving a polygonal shaft (78) that is placed in and attached to the movable unit (60), respectively to the base, the other portion (77) being received in a seat (79) attached to the base (80), respectively to the movable unit.

2. Device according to Claim 1, in which the movable unit (10, 60, 86) and the base (9, 62, 80, 85) are rigid and comprise matching guidance surfaces that are capable, when the unit is in the reference position relative to the base, of immobilizing five degrees of freedom and of limiting the relative movement in one direction in the sixth degree of freedom, the flattening force being applied in the direction opposite to the said direction of movement limited by the guidance surfaces.

3. Device according to Claim 1 or 2, in which the reference position is defined by matching bearing surfaces of the movable unit (10, 60, 86) and of the base (9, 62, 80, 85) at a radial distance from the pivoting axis (11, 71, 93).

4. Vehicle fitted with a fitment-prevention system, of the lorry or trailer type, comprising a lighting and/or signalling device (4) according to one of the preceding claims, placed behind the vehicle such that the signalling elements (12), when the movable unit (10, 60, 86) is in the reference position, are recessed and above the fitment-prevention system (3) and so that the automatic-return movement zone (16) is still further recessed towards the front of the vehicle.

## Patentansprüche

1. Vorrichtung (4) zur Beleuchtung und/oder Signalgebung für Fahrzeug, mit einem Träger (9, 62, 80, 85), der mit einem Mittel (51) für die Befestigung am Fahrzeug und mit einem beweglichen Block (10, 60, 86), der eine Referenzposition in Bezug auf den Träger (9, 62, 80, 85) aufweist und mit wenigstens einem Signalgebungselement (12) ausgerüstet ist, das dazu bestimmt ist, erleuchtet zu werden, wobei der Block (10, 60, 86) in Bezug auf den Träger (9, 62, 80, 85) um eine Schwenkachse (11, 71, 93), die in Bezug auf das Signalgebungselement (12) in einer Richtung senkrecht zu der Vorwärtsbewegung des Fahrzeugs seitlich versetzt ist, rotatorisch beweglich ist, wobei die Vorrichtung ein elastisches Rückstellmittel umfasst, das dazu bestimmt ist, den beweglichen Block (10, 60, 86) in die Referenzposition zurückzustellen, wenn sich der bewegliche Block in einer Verlagerungszone mit automatischer Rückkehr (16) befindet, und zwischen dem Träger (9, 62, 80, 85) und dem beweglichen Block (10, 60, 86) eine Presskraft auszuüben, wenn dieser Letztere in der Referenzposition ist, **dadurch gekennzeichnet, dass** das elastische Rückstellmittel eine elastomere Monoblockfeder (75) umfasst, die zwei koaxiale, polygonförmige, zylindrische Abschnitte (76, 77) aufweist, wobei einer (76) der Abschnitte eine polygonförmige Welle (78) aufnimmt, die auf den beweglichen Block (60) bzw. auf den Träger eingestellt und daran befestigt ist, während der andere Abschnitt (77) in einem Sitz (79) aufgenommen ist, der am Träger (80) bzw. an dem beweglichen Block befestigt ist.

2. Vorrichtung nach Anspruch 1, wobei der bewegliche Block (10, 60, 86) und der Träger (9, 62, 80, 85) starr sind und komplementäre Führungsoberflächen aufweisen, die dann, wenn der Block in der Referenzposition in Bezug auf den Träger ist, fünf Freiheitsgrade blockieren können und die relative Verlagerung in einer Richtung längs des sechsten Freiheitsgrades einschränken können, wobei die Presskraft in der zu der eingeschränkten Verlagerungsrichtung entgegengesetzten Richtung durch die Führungsoberflächen ausgeübt wird.

3. Vorrichtung nach Anspruch 1 oder 2, wobei die Referenzposition durch die komplementären Abstützoberflächen des beweglichen Blocks (10, 60, 86) und des Trägers (9, 62, 80, 85) in einem radialen Abstand von der Schwenkachse (11, 71, 93) definiert ist.

4. Fahrzeug des Typs Lastkraftwagen oder Anhänger, das mit einem Unterfahrschutzsystem ausgerüstet ist, mit einer Beleuchtungs- und/oder Signalgebungsvorrichtung (4) nach einem der vorhergehenden Ansprüche, die hinter dem Fahrzeug in der Weise angeordnet ist, dass die Signalgebungselemente (12) dann, wenn der bewegliche Block (10, 60, 86) in der Referenzposition ist, zurückgezogen sind und sich über dem Unterfahrschutzsystem (3) befinden, und dass die Verlagerungszone (16) mit automatischer Rückkehr noch weiter in Richtung zur Vorderseite des Fahrzeugs zurückgezogen ist.
